# EUROPÄISCHE PATENTSCHRIFT

(11) **EP 0 883 897 B1**
(45) Veröffentlichungstag und Bekanntmachung des Hinweises auf die Patenterteilung: **26.06.2002**
(21) Anmeldenummer: 97952713.2
(22) Anmeldetag: 10.12.1997
(51) Int. Cl.: H01J 61/54, H01J 1/30

(54) **VERWENDUNG EINER KALTKATHODE IN ENTLADUNGSLAMPEN, ENTLADUNGSLAMPE MIT DIESER KALTKATHODE UND BETRIEBSWEISE FÜR DIESE ENTLADUNGSLAMPE**
USE OF A COLD CATHODE FOR DISCHARGE LAMPS, DISCHARGE LAMP FITTED WITH SAID COLD CATHODE, AND PRINCIPLE OF OPERATION OF SAID DISCHARGE LAMP
UTILISATION D'UNE CATHODE FROIDE POUR LAMPES A DECHARGE, LAMPE A DECHARGE POURVUE DE LA CATHODE FROIDE EN QUESTION ET MODE DE FONCTIONNEMENT DE LADITE LAMPE A DECHARGE

(30) Priorität: 11.12.1996 DE 19651552
(43) Veröffentlichungstag der Anmeldung: 16.12.1998
(73) Patentinhaber: Patent-Treuhand-Gesellschaft für elektrische Glühlampen mbH, 81543 München (DE)
(72) Erfinder: VOLLKOMMER, Frank, D-82131 Buchendorf (DE); HITZSCHKE, Lothar, D-81737 München (DE)
(86) Internationale Anmeldenummer: DE9702881
(87) Internationale Veröffentlichungsnummer: WO9826447

(56) Entgegenhaltungen:
- EP-A- 0 428 853
- JP-A- 6 103 886
- PATENT ABSTRACTS OF JAPAN vol. 097, no. 002, 28.Februar 1997 & JP 08 262996 A (OLYMPUS OPTICAL CO LTD), 11.Oktober 1996,
- PATENT ABSTRACTS OF JAPAN vol. 095, no. 001, 28.Februar 1995 & JP 06 283092 A (OLYMPUS OPTICAL CO LTD), 7.Oktober 1994,
- GUNDEL H ET AL: "LOW-PRESSURE HOLLOW CATHODE SWITCH TRIGGERED BY A PULSED ELECTRON BEAM EMITTED FROM FERROELECTRICS" APPLIED PHYSICS LETTERS, Bd. 54, Nr. 21, 22.Mai 1989, Seiten 2071-2073, XP000080569
- PATENT ABSTRACTS OF JAPAN vol. 018, no. 077 (E-1504), 8.Februar 1994 & JP 05 290811 A (MATSUSHITA ELECTRON CORP), 5.November 1993,

## Beschreibung

### Technisches Gebiet

Die Erfindung betrifft eine Verwendung einer Kaltkathode in Entladungslampen, insbesondere für Entladungslampen, die mittels einer dielektrisch behinderten Entladung betrieben werden, gemäß dem Oberbegriff des Patentanspruches 1.

Bei dielektrisch behinderten Entladungen ist mindestens eine Elektrode durch eine dielektrische Schicht vom Entladungsraum getrennt.

Außerdem betrifft die Erfindung eine Entladungslampe mit dieser Kaltkathode, insbesondere eine Entladungslampe, die mittels einer dielektrisch behinderten Entladung betrieben wird, gemäß dem Oberbegriff des Patentanspruches 9 sowie ein Verfahren zum Betreiben derartiger Lampen gemäß dem Oberbegriff des Patentanspruches 13.

Unter der Bezeichnung "Entladungslampe" sind hier Strahler gemeint, die Licht emittieren, d.h. sichtbare elektromagnetische Strahlung, oder auch Ultraviolett(UV)- sowie Vakuumultraviolett(VUV)-Strahlung.

Aufgabe der Elektroden von Entladungslampen ist es unter anderem, die für den Unterhalt einer selbständigen Entladung notwendige Anzahl von freien Elektronen zu liefern. Diese Elektronen werden im wesentlichen von der Kathode geliefert (bei Betrieb mit Spannung unveränderlicher Polarität, z.B. Gleichspannung oder unipolarer Pulsspannung) bzw. von der momentanen Kathode (bei Betrieb mit Spannung veränderlicher Polarität, z.B. Wechselspannung oder bipolarer Pulsspannung). Außerdem werden freie Elektronen in dem der (momentanen) Kathode vorgelagerten Kathodenfallraum erzeugt.

Der Kathodenfallraum ist durch eine im Vergleich zum restlichen Raum zwischen den Elektroden hohe Feldstärke gekennzeichnet, d.h. das elektrische Potential bezüglich der Kathode fällt in diesem Bereich relativ stark ab. Folglich ist eine Erzeugung von freien Elektronen im Kathodenfallraum im allgemeinen mit einem entsprechend hohen Leistungsumsatz verknüpft. Im Hinblick auf eine möglichst effiziente Erzeugung von Nutzstrahlung, d.h. von Licht bzw. UV/VUV-Strahlung, ist man bestrebt, den Kathodenfall von Entladungslampen zu reduzieren. Das erfordert letztendlich die Effizienz zu steigern, mit der Elektronen aus der Kathodenoberfläche austreten.

### Stand der Technik

Eine Möglichkeit besteht darin, die Elektroden als Wendeln auszuführen, zu beheizen und gegebenenfalls zusätzlich mit einer Emitterpaste zu beschichten, um dadurch die thermische Elektronenemission zu verbessern. Diese relativ aufwendige Technik wird beispielsweise bei Leuchtstofflampen angewandt. Weitere, mit diesen sogenannten Glühelektroden verbundene Nachteile sind die begrenzte Lebensdauer der Lampe und die Aufheizung des Füllgases.

Das DE-GM 295 01 343 offenbart eine Glimmleuchtstofflampe mit einer Kaltkathode gemäß den Oberbegriff der Patentanspruchs 1. Zur Reduzierung des Kathodenfalls sind die Elektroden mit Mangan oder Lanthan dotiert.

Die US 5 418 424 beschreibt eine VUV-Strahlungsquelle mit einer Fotokathode. Innerhalb der Strahlungsquelle werden unter anderem Xe-Excimere gebildet, welche kurzwellige VUV-Strahlung erzeugen. Die Fotokathode besteht aus einer 50 nm dicken, auf eine Edelstahlfläche aufgebrachten fotoemittierenden Schicht und einer dazu parallelen Gitterelektrode. Die VUV-Strahlung trifft durch die Gitterelektrode hindurch auf die fotoemittierende Schicht und löst dort mittels Fotoeffekt Elektronen aus. Diese treten dann durch die Gitterelektrode hindurch und unterhalten so die Entladung. Nachteilig ist, daß der beschriebene Mechanismus zur Elektronenerzeugung auf der durch die Entladung selbst erzeugten VUV-Strahlung basiert. Während der Zündung der Entladung steht diese Elektronenquelle also noch nicht oder nur eingeschränkt zur Verfügung. Dies macht sich bei gepulst betriebenen Entladungen in einer Effizienzeinbuße negativ bemerkbar.

Die EP 675 520 A2 offenbart eine topf- oder becherförmige Elektrode für Miniatur-Neonlampen für die Automobilbeleuchtung. Die Innenwandung der Elektrode ist mit einer Emitterschicht gleichmäßig bedeckt.

Die US 5 159 238 schließlich beschreibt eine Kathode für flache Entladungslampen. Die Kathode besteht aus elektrisch leitfähigen Oxidteilchen, die in einem niedrig schmelzenden Glas, z.B. Bleiglas, eingelagert sind.

### Darstellung der Erfindung

Der Erfindung liegt die Aufgabe zugrunde, die genannten Nachteile zu beseitigen und eine Elektrode mit verbesserten Elektronenemissionseigenschaften bei niedriger Elektrodentemperatur anzugeben.

Diese Aufgabe wird erfindungsgemäß durch die kennzeichnenden Merkmale des Patentanspruchs 1 gelöst. Besonders vorteilhafte Ausführungen der Erfindung sind in den darauf gerichteten Unteransprüchen beschrieben.

Eine weitere Aufgabe der Erfindung ist es, eine Entladungslampe anzugeben, welche die genannte Kathode enthält. Diese Aufgabe wird erfindungsgemäß durch die kennzeichnenden Merkmale des Anspruchs 9 gelöst.

Schließlich ist es eine weitere Aufgabe der Erfindung, ein Verfahren zum Betreiben einer derartigen Entladungslampe anzugeben. Diese Aufgabe wird erfindungsgemäß durch die kennzeichnenden Merkmale des Anspruchs 13 gelöst.

Der Grundgedanke der Erfindung besteht darin, die von R. Miller und S. Savage nachgewiesene Fähigkeit von ferroelektrischen Materialien zur Elektronenemission (R. Miller und S. Savage, Journal of Applied Physics 21, 1960, S. 662ff) gezielt für eine Kaltkathode mit verbesserten Elektronenemissionseigenschaften einzusetzen. Der Mechanismus der Elektronenfreisetzung basiert bekanntermaßen auf einer schnellen Polarisationsänderung innerhalb des Ferroelektrikums.

Die Erfindung schlägt eine Kaltkathode mit einem sandwichartigen Aufbau vor. Dabei ist ein ferroelektrisches Material, z.B. eine Keramik aus Blei-Zirkon-Titanat (PZT) oder Blei-Lanthan-Zirkon-Titanat (PLZT) zwischen zwei elektrisch leitfähigen Flächen, z.B. durch Platten, Folien, Filme oder ähnliches realisiert, angeordnet. Eine oder beide Flächen haben mindestens eine oder mehrere Öffnungen, z.B. in Form eines Lochbleches, Drahtgitters oder einer entsprechenden aufgebrachten Schicht. An den Stellen der Öffnungen ist das ferroelektrische Material unbedeckt, so daß die vom Ferroelektrikum erzeugten freien Elektronen durch diese Öffnungen hindurch in Richtung Anode der Entladungsvorrichtung gelangen können. Die erfindungsgemäße sandwichartige Kaltkathode wird der Kürze wegen im folgenden auch als Sandwichkathode bezeichnet.

Während des Betriebes in einer Entladungslampe wird an die beiden elektrisch leitfähigen Flächen eine Folge von schnell wechselnden Spannungspulsen angelegt. Die Sandwichkathode wirkt folglich wie ein elektrischer Kondensator, wobei die Flächen den Kondensatorelektroden entsprechen. Dem Ferroelektrikum kommt in diesem Bild die Rolle des Kondensatordielektrikums zu. Auf diese Weise wird die eingangs geschilderte schnelle Polarisationsänderung innerhalb des Ferroelektrikums erzielt.

Bevorzugt ist die Sandwichkathode und insbesondere die ferroelektrische Schicht dünn ausgeführt, um die für die Polarisationsänderung erforderliche Höhe der Spannungspulse möglichst gering zu halten. Typische Werte für die Dicke der Schicht betragen weniger als 1 mm, bevorzugt liegen sie im Bereich von ca. 10 µm und 0,2 mm.

Die Sandwichkathode läßt sich mit verschiedenartigen Kaltkathoden-Entladungslampen verwenden. Die erfindungsgemäße Kaltkathode entfaltet ihre vorteilhafte Wirkung unabhängig davon, ob die Anode eine dielektrische Behinderung aufweist oder nicht. Entscheidend ist in diesem Zusammenhang einzig, daß sich die Sandwichkathode selbst ohne dielektrische Behinderung innerhalb des Entladungsgefäßes befindet. Die Geometrie der Sandwichkathode wird dabei möglichst optimal an die Geometrie des Entladungsgefäßes angepaßt.

Für röhrenartige Entladungslampen, z.B. wie die eingangs erwähnte Glimmleuchtstofflampe der DE-GM 295 01 343 oder wie die in der EP 700 074 offenbarte Glimmleuchtstofflampe, ist die Sandwichkathode als Hohlzylinder geformt. Die metallische Innen- und Außenwandung der Sandwichkathode weist je eine Stromzuführung auf. Die beiden Stromzuführungen sind gasdicht aus dem Entladungsgefäß nach Außen geführt. Damit ist es möglich, die schnell wechselnden Spannungspulse an die Sandwichkathode zu führen.

Ebenfalls vorteilhaft wird die Sandwichkathode in einer Entladungslampe verwendet, die mit einer einseitig dielektrisch behinderten Entladung betrieben wird. Die Sandwichkathode ist im Innern des Entladungsgefäßes angeordnet, beispielsweise indem sie direkt auf der Innenwandung aufgebracht ist. Die Anode ist entweder auf der Außenwandung angebracht oder im Innern des Entladungsgefäßes. Im letzteren Fall ist die Anode allerdings durch ein zusätzliches Dielektrikum, beispielsweise eine dünne Glasschicht, von der eigentlichen Entladung getrennt.

Ein Vorteil der Sandwichkathode besteht in der präzisen Steuerbarkeit des Zeitpunkts der Freisetzung der Elektronen. Durch die zeitliche Abstimmung der Spannungssignale für die schnelle Polarisationsänderung bzw. die Entladung läßt sich nämlich die Effizienz der Nutzstrahlungserzeugung steigern. Das gilt insbesondere für die sich ohnehin schon durch eine verbesserte Nutzstrahlungseffizienz auszeichnende gepulste Entladung gemäß WO 94/23442. Die Effizienzsteigerung wird durch das gezielte Bereitstellen von ausreichend vielen Elektronen auf der Oberfläche der Sandwichkathode unmittelbar vor der Zündung der Gasentladung erreicht.

Für die bei dielektrisch behinderten Entladungen ebenfalls verwendete Wechselspannungsanregung ist die Effizienzsteigerung durch Verwenden einer erfindungsgemäßen Sandwichkathode naturgemäß eingeschränkt, da hier bei jeder zweiten Phase die Sandwichkathode als Anode wirkt und folglich die dort freigesetzten Elektronen nicht zur Entladung beitragen.

Im Falle einer gepulst betriebenen dielektrisch behinderten Entladung sieht das erfindungsgemäße Betriebsverfahren wie folgt aus. Zunächst wird an die beiden elektrischen Anschlüsse der Sandwichkathode ein Spannungssignal mit schnell wechselnder Polarität gelegt. Sobald aufgrund der dadurch bewirkten schnellen Polarisationsänderung des Ferroelektrikums ausreichend viele Elektronen auf der Oberfläche der Sandwichkathode freigesetzt sind, wird ein Spannungspuls geeigneter Polarität zwischen die Sandwichkathode und die Anode gelegt. Dadurch werden die Elektronen in Richtung Anode beschleunigt und folglich die Entladung gezündet.

### Beschreibung der Zeichnungen

Die Erfindung wird im folgenden anhand einiger Ausführungsbeispiele näher erläutert. Es zeigen
- Fig. 1a: die Draufsicht einer erfindungsgemäßen streifenförmigen Kaltkathode mit ferroelektrischem Elektronenemitter in Sandwichbauweise,
- Fig. 1b: den Querschnitt entlang der Linie AA der Sandwichkathode aus Figur 1a,
- Fig. 2a: die Draufsicht eines UV/VUV-Flachstrahlers mit der streifenförmigen Sandwichkathode aus Figur 1,
- Fig. 2b: den Querschnitt entlang der Linie BB des UV/VUV-Flachstrahlers aus Figur 2b,
- Fig. 3: eine Prinzipdarstellung der elektrische Beschaltung der Elektrodenanordnung aus Figur 2,
- Fig. 4a: einen Ausschnitt aus dem zeitlichen Verlauf der Spannung an den Lampenelektroden bei gepulster Betriebsweise,
- Fig. 4b: den zu Figur 4a zugehörigen zeitlichen Verlauf der Spannung an den Elektroden der Sandwichkathode entsprechend dem erfindungsgemäßen Betriebsverfahren.

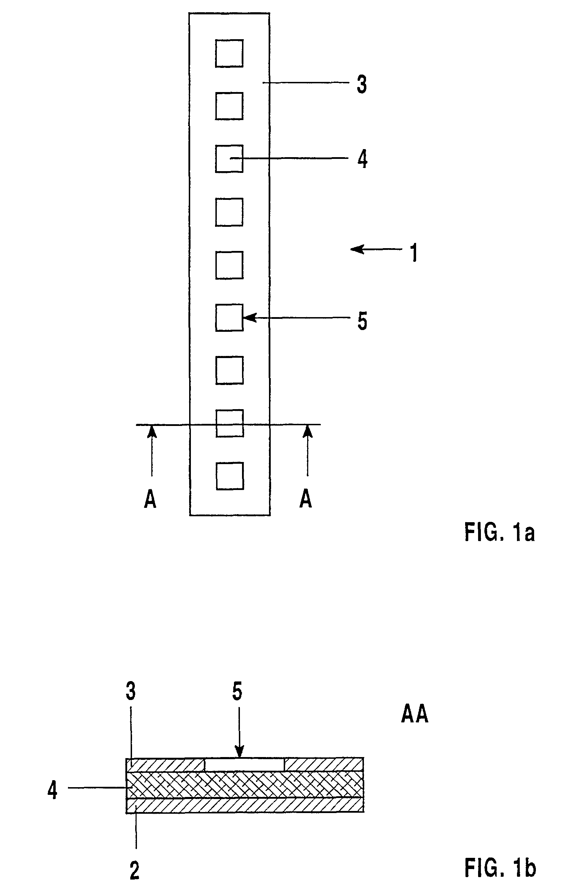

Die Figuren 1a, 1b zeigen schematisch eine streifenförmige Sandwichkathode 1 in Draufsicht bzw. im Querschnitt entlang der Linie AA. Die ca. 2 mm breite Sandwichkathode 1 besteht aus einer Bodenschicht 2, einer Deckschicht 3 sowie einer zwischen Boden- und Deckschicht angeordneten ferroelektrischen Schicht 4. Die ferroelektrische Schicht 4 besteht aus einem ca. 100 µm dicken Substrat aus PZT (Blei-Zirkon-Titanat). Boden- 2 und Deckschicht 3 bestehen aus Platin, das auf die Ober- und Unterseite des ferroelektrische Substrats 4 mit einer jeweiligen Schichtdicke von ca. 1 µm aufgebracht wurde. Die Deckschicht 3 weist in regelmäßigen Abständen von ca. 200 µm quadratische Öffnungen 5 mit den Abmessungen 200·200 µm² auf. Für den Betrieb in einer Entladungslampe werden Boden- 2 und Deckschicht 3 jeweils mit einer Stromzuführung verbunden (nicht dargestellt). Damit die Sandwichkathode 1 aus ihren Öffnungen 5 heraus Elektronen emittiert, werden die beiden Stromzuführung mit einer Spannungsquelle verbunden (nicht dargestellt), welche ein Spannungssignal mit schnellen Polaritätswechseln liefert.

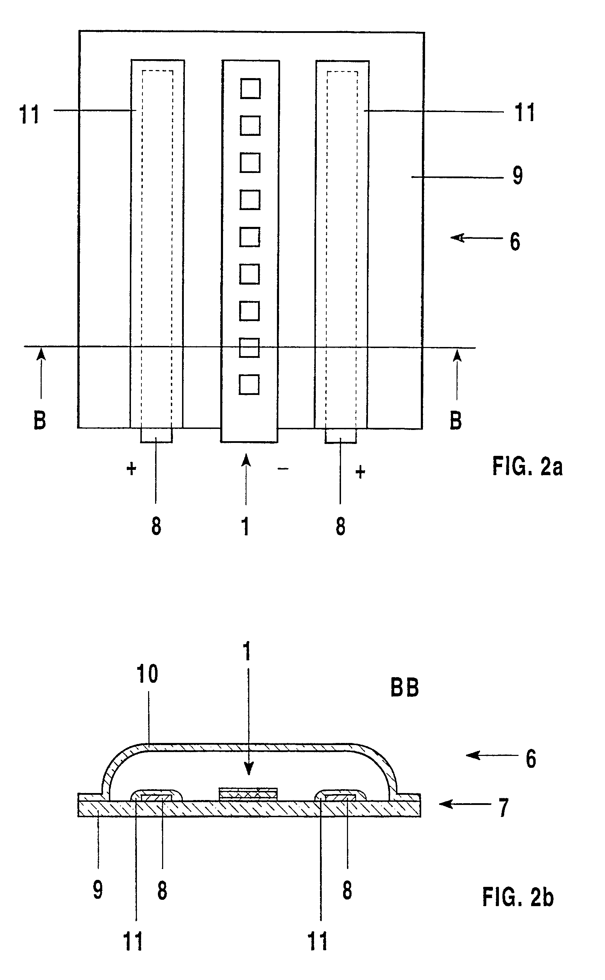

Die Figuren 2a, 2b zeigen in schematischer Darstellung eine Draufsicht bzw. den Querschnitt längs der Linie BB eines UV/VUV-Flachstrahlers 6, d.h. einer flachen Entladungslampe, die auf die effiziente Abstrahlung von UVbzw. VUV-Strahlung hin konzipiert ist. Der Flachstrahler 6 besteht aus einem flachen Entladungsgefäß 7 mit rechteckiger Grundfläche, einer streifenförmigen Sandwichkathode 1 gemäß Figur 1 und zwei streifenförmigen metallischen Anoden 8. Das Entladungsgefäß 7 besteht seinerseits aus einer rechteckigen Bodenplatte 9 und einem wannenartigen Deckel 10 (in Figur 2a nicht dargestellt), beide aus Glas. Die Bodenplatte 9 und der Deckel 10 sind im Bereich ihrer umlaufenden Kanten gasdicht miteinander verbunden und umschließen so die Gasfüllung des Flachstrahlers 6. Die Gasfüllung besteht aus Xenon mit einem Fülldruck von 10 kPa. Die Anoden 8 haben gleiche Breiten und sind ebenso wie die Sandwichkathode 1 auf der Innenwandung der Bodenplatte 9 parallel zueinander aufgebracht. Im Unterschied zur Sandwichkathode 1 sind beide Anoden 8 vollständig mit einer Glasschicht 11 bedeckt, deren Dicke ca. 150 µm beträgt.

In einer Variante (nicht dargestellt) ist die Innenwandung des Deckels 10 mit einem Leuchtstoff oder Leuchtstoffgemisch beschichtet, welches die von der Entladung erzeugte UV/VUV-Strahlung in sichtbares Licht konvertiert. Bei dieser Variante handelt es sich um eine flache Leuchtstofflampe, die für die Allgemeinbeleuchtung oder Hintergrundbeleuchtung von Anzeigen, z.B. LCD (Liquid Crystal Display), geeignet ist.

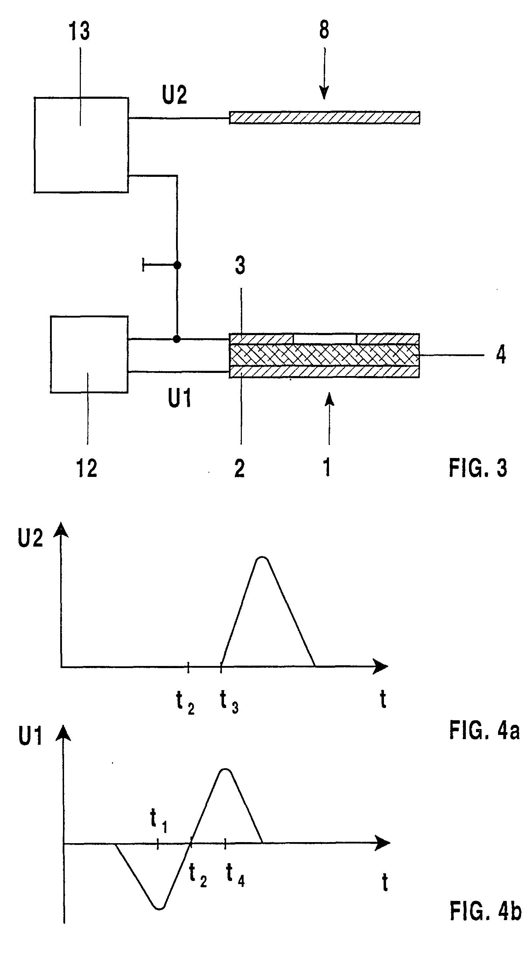

Zur Verdeutlichung des Verfahrens zum Betreiben von Entladungslampen mit Sandwichkathode ist in Figur 3 schematisch die Anordnung aus Figur 2 und deren elektrische Beschaltung dargestellt. Dabei bezeichnen gleiche Bezugsziffern gleiche Merkmale. Die Elektroden der Sandwichkathode 1, nämlich die Bodenschicht 2 und die Deckschicht 3, sind mit je einem Ausgangspol einer ersten, ein Spannungssignal U₁ liefernden Spannungsquelle 12 verbunden. Die Anode 8 (zur Vereinfachung ist nur ein Anodenstreifen im Querschnitt gezeigt) ist mit einem ersten Pol einer zweiten, ein Spannungssignal U₂ liefernden Spannungsquelle 13 verbunden. Außerdem ist die Deckschicht 3 der Sandwichkathode 1 zusätzlich mit dem zweiten Pol der zweiten Spannungsquelle 13 verbunden.

Die Figuren 4a und 4b dienen ebenfalls der Erläuterung des Prinzips des erfindungsgemäßen Betriebsverfahrens am Beispiel einer gepulst betriebenen Entladung. Sie zeigen jeweils den zeitlichen Verlauf der beiden, in Figur 3 erwähnten Spannungssignale U₁ bzw. U₂. Dargestellt ist jeweils nur ein Spannungspuls einer im Prinzip unbeschränkten Folge von Spannungspulsen. Wesentlich ist unter anderem die zeitliche Synchronisierung der beiden Spannungssignale U₁ und U₂. Das erste Spannungssignal U₁ ist so gewählt, daß es zu einem Zeitpunkt t₂ schnell die Polarität wechselt und so die Freisetzung von Elektronen aus der ferroelektrischen Schicht 4 startet. Danach, d.h. zu einem späteren Zeitpunkt t₃ > t₂ wird gezielt ein Spannungspuls des Spannungssignals U₂ gestartet, der die freigesetzten Elektronen in Richtung zur Anode 8 beschleunigt und dadurch die Entladung zündet bzw. unterhält. Die Zeitdauer für den Polaritätswechsel des Spannungssignals U₁ - hier gerechnet als zeitlicher Abstand Δt = t₄ - t₁ zwischen den Spitzen zweier zu den Zeitpunkten t₁ und t₄ aufeinanderfolgender Spannungspulse unterschiedlicher Polarität - beträgt ca. 500 ns und weniger. Typische Werte liegen in der Größenordnung von 100 ns oder einigen 100 ns.

## Patentansprüche

1. Verwendung einer Kaltkathode in Entladungslampen, insbesondere in Entladungslampen, die mittels einer dielektrisch behinderten Entladung betrieben werden, **dadurch gekennzeichnet, daß** die Kaltkathode (1) zwei elektrisch leitfähige, einander gegenüberstehende Elektroden (2,3) aufweist, zwischen welchen Elektroden (2,3) ein Ferroelektrikum (4) angeordnet ist, wobei mindestens eine der Elektroden (3) eine oder mehrere Öffnungen (5) aufweist, so daß im Betrieb, mittels Anlegen einer Spannung schnell wechselnder Polarität an die beiden Elektroden (2,3), durch die Öffnungen (5) hindurch Elektronen freigesetzt werden, welche Elektronen für die Zündung bzw. den Unterhalt der Entladung einer Entladungslampe geeignet sind.

2. Verwendung nach Anspruch 1, wobei die Elektroden (2,3) und das Ferroelektrikum (4) eine flächen- oder streifenartige Struktur bilden und wobei die Deck- und Bodenfläche des Ferroelektrikums (4) jeweils einer Innenseite der einander gegenüberstehenden Elektroden (2,3) zugewandt sind.

3. Verwendung nach Anspruch 2, wobei die flächenartige Struktur als Hohlzylinder geformt ist.

4. Verwendung nach Anspruch 2 oder 3, wobei die Elektroden (2,3) direkt auf die Deck- und Bodenfläche des Ferroelektrikums (4) aufgebracht sind derart, daß die Kaltkathode eine sandwichartige Struktur (1) aufweist.

5. Verwendung nach Anspruch 1, wobei die Dicke des Ferroelektrikums (4) weniger als 1 mm beträgt, bevorzugt im Bereich zwischen ca. 50 µm und 500 µm liegt.

6. Verwendung nach Anspruch 1, wobei die Elektroden (2,3) aus Metall, insbesondere Platin bestehen.

7. Verwendung nach Anspruch 1, wobei die Öffnungen (5) mindestens einer der Elektroden (3) durch eine gitter- oder netzartige Form realisiert sind.

8. Verwendung nach Anspruch 1, wobei das Ferroelektrikum (4) aus Blei-Zirkon-Titanat (PZT) oder Blei-Lanthan-Zirkon-Titanat (PLZT) besteht.

9. Entladungslampe (6) mit einem zumindest teilweise transparenten und mit einer Gasfüllung gefüllten, geschlossenen (7) oder von einem Gas oder Gasgemisch durchströmten offenen Entladungsgefäß aus elektrisch nichtleitendem Material und mit einer oder mehreren innerhalb des Entladungsgefäßes angeordneten Kalthathoden mit Elektroden (1) negativer Polarität sowie mit einer oder mehreren Anode mit Elektroden (8) positiver Polarität, **dadurch gekennzeichnet, daß** die Kathode(n) (1) die Merkmale eines der Ansprüche 1 bis 8 aufweist (aufweisen).

10. Entladungslampe nach Anspruch 9, wobei die Kathode(n) (1) streifenartig auf der Innenwandung des Entladungsgefäßes (7) angeordnet ist (sind) derart, daß die Öffnungen (5) in der (den) Kathode(n) (1) in Richtung zum Innern des Entladungsgefäßes (7) zeigen.

11. Entladungslampe nach Anspruch 9, wobei die Anode bzw. Anoden (8) vom Innern des Entladungsgefäßes (7) und gegebenenfalls voneinander durch dielektrisches Material (11) getrennt sind.

12. Entladungslampe nach Anspruch 11, wobei die Anode(n) (8) streifenartig auf der Innenwandung des Entladungsgefäßes (7) angeordnet ist (sind) und wobei jeder Anodenstreifen (8) mit einer dielektrischen Schicht (11) vollständig bedeckt ist.

13. Verfahren zum Betreiben einer Entladungslampe (6) mit den Merkmalen des Anspruchs 9, **gekennzeichnet durch** folgende Verfahrensschritte
- Bereitstellen eines ersten zeitveränderlichen Spannungssignals (U1) mit schnellen Polaritätswechseln,
- Bereitstellen eines zweiten zeitveränderlichen Spannungssignals (U2)
- Synchronisieren von erstem und zweitem Signal derart, daß einem schnellen Polaritätswechsel des ersten Signals (U1) eine Zunahme des Betrags der Amplitude des zweiten Signals (U2) folgt,
- Anlegen des ersten Spannungssignals (U1) an die Elektroden (2,3) der Kaltkathode(n) (1), wodurch die Kaltkathode(n) (1) bei jedem Polaritätswechsel Elektronen **durch** die Öffnungen (5) hindurch freisetzt (freisetzen),
- Anlegen des zweiten Spannungssignals (U2) an die Anode(n) (8) und Kaltkathode(n) (1) der Entladungslampe (6) derart, daß bei jeder Zunahme des Betrags der Amplitude des zweiten Spannungssignals (U2) die freigesetzten Elektronen in Richtung Anode(n) (8) beschleunigt werden und so zur Zündung bzw. zum Unterhalt der Entladung beitragen.

14. Verfahren nach Anspruch 13, wobei die Zeitdauer für den Polaritätswechsel des ersten Spannungssignals (U1) weniger als ca. 500 ns beträgt.

15. Verfahren nach Anspruch 13, wobei das zweite zeitveränderliche Spannungssignal (U2) aus durch Pausenzeiten getrennten Spannungspulsen besteht.

16. Verfahren nach Anspruch 15, wobei die Pulsbreite im Bereich zwischen 0,1 µs und 10 µs, bevorzugt im Bereich zwischen 0,5 µs und 5 µs liegt.

17. Verfahren nach Anspruch 15 oder 16, wobei die Pulswiederholfrequenz im Bereich zwischen 1 kHz und 1 MHz, bevorzugt im Bereich zwischen 10 kHz und 100 kHz liegt.

18. Verfahren nach Anspruch 13, wobei das zweite zeitveränderliche Spannungssignal (U2) aus einer Wechselspannung besteht.

## Claims

1. Use of a cold cathode in discharge lamps, in particular in discharge lamps which are operated by means of a dielectrically impeded discharge, **characterized in that** the cold cathode (1) has two electrically conductive, mutually opposite electrodes (2, 3), between which electrodes (2, 3) a ferroelectric (4) is arranged, at least one of the electrodes (3) having one or more openings (5) so that, during operation, by applying a voltage of rapidly reversing polarity to the two electrodes (2, 3) electrons are released through the openings (5), which electrons are suitable for igniting or maintaining the discharge of a discharge lamp.

2. Use according to Claim 1, in which the electrodes (2, 3) and the ferroelectric (4) form a two-dimensional or strip-like structure and in which the top and bottom surfaces of the ferroelectric (4) in each case face an inner side of the mutually opposite electrodes (2, 3).

3. Use according to Claim 2, in which the two-dimensional structure is formed as a hollow cylinder.

4. Use according to Claim 2 or 3, in which the electrodes (2, 3) are applied directly onto the top and bottom surfaces of the ferroelectric (4) in such a way that the cold cathode has a sandwich-type structure (1).

5. Use according to Claim 1, in which the thickness of the ferroelectric (4) is less than 1 mm, preferably in the range between approximately 50 µm and 500 µm.

6. Use according to Claim 1, in which the electrodes (2, 3) consist of metal, in particular platinum.

7. Use according to Claim 1, in which the openings (5) of at least one of the electrodes (3) are realized in the form of a grating or grid.

8. Use according to Claim 1, in which the ferroelectric (4) consists of lead zirconium titanate (PZT) or lead lanthanum zirconium titanate (PLZT).

9. Discharge lamp (6) having an at least partially transparent discharge vessel, which is closed (7) and filled with a gas filling or is open and has a gas or gas mixture flowing through it, and is made from an electrically non-conducting material, and having one or more cold cathodes with electrodes (1), arranged inside the discharge vessel, of negative polarity as well as one or more anodes with electrodes (8) of positive polarity, **characterized in that** the cathode(s) (1) has (have) the features of one of Claims 1 to 8.

10. Discharge lamp according to Claim 9, in which the cathode(s) (1) is (are) arranged in a strip-like fashion on the inner wall of the discharge vessel (7) in such a way that the openings (5) in the cathode(s) (1) point in the direction of the interior of the discharge vessel (7).

11. Discharge lamp according to Claim 9, in which the anode or anodes (8) are separated from the interior of the discharge vessel (7) and, possibly, from one another by dielectric material (11).

12. Discharge lamp according to Claim 11, in which the anode(s) (8) is (are) arranged in a strip-like fashion on the inner wall of the discharge vessel (7) and in which each anode strip (8) is covered completely by a dielectric layer (11).

13. Method for operating a discharge lamp (6) having the features of Claim 9, **characterized by** the following method steps
- providing a first time-variant voltage signal (U1) with rapid polarity reversals,
- providing a second time-variant voltage signal (U2),
- synchronizing the first and second signals in such a way that a rapid polarity reversal of the first signal (U1) is followed by an increase in the absolute value of the amplitude of the second signal (U2),
- applying the first voltage signal (U1) to the electrodes (2, 3) of the cold cathode(s) (1), as a result of which the cold cathode(s) (1) releases (release) electrons through the openings (5) at each polarity reversal, and
- applying the second voltage signal (U2) to the anode(s) (8) and cold cathode(s) (1) of the discharge lamp (6) in such a way that with each increase in the absolute value of the amplitude of the second voltage signal (U2) the released electrons are accelerated in the direction of the anode(s) (8) and thus contribute to igniting or maintaining the discharge.

14. Method according to Claim 13, in which the period for the polarity reversal of the first voltage signal (U1) is less than approximately 500 ns.

15. Method according to Claim 13, in which the second time-variant voltage signal (U2) comprises voltage pulses separated by off periods.

16. Method according to Claim 15, in which the pulse width is in the range of between 0.1 µs and 10 µs, preferably in the range of between 0.5 µs and 5µs.

17. Method according to Claim 15 or 16, in which the pulse repetition frequency is in the range of between 1 kHz and 1 MHz, preferably in the range of between 10 kHz and 100 kHz.

18. Method according to Claim 13, in which the second time-variant voltage signal (U2) comprises an AC voltage.

## Revendications

1. Utilisation d'une cathode froide dans des lampes à décharge, notamment dans des lampes à décharge qui fonctionnent au moyen d'une décharge rendue incomplète par voie diélectrique, **caractérisée en ce que** la cathode (1) froide a deux électrodes (2, 3) mutuellement opposées, conductrices de l'électricité, électrodes (2, 3) entre lesquelles est interposé un ferroélectrique (4), au moins l'une des électrodes (3) ayant une ouverture ou plusieurs ouvertures (5) de sorte que; en fonctionnement, au moyen de l'application d'une tension de polarité alternant rapidement aux deux électrodes (2, 3) des électrons libérés passent dans les ouvertures (5), électrons qui sont propres à l'amorçage ou à l'entretien de la décharge d'une lampe à décharge.

2. Utilisation suivant la revendication 1, dans laquelle les électrodes (2, 3) et le ferroélectrique (4) forment une structure ayant la forme d'une surface ou d'une bande et dans lequel les surfaces supérieure et de fond du ferroélectrique (4) sont tournées respectivement vers l'une des faces intérieures des électrodes (2, 3) mutuellement opposées.

3. Utilisation suivant la revendication 2, dans laquelle la structure en forme de surface est conformée en cylindre tubulaire.

4. Utilisation suivant la revendication 2 ou 3, dans laquelle les électrodes (2, 3) sont déposées directement sur les surfaces supérieure et de fond du ferroélectrique (4) de façon que la cathode froide ait une structure (1) stratifiée.

5. Utilisation suivant la revendication 1, dans laquelle l'épaisseur du ferroélectrique (4) est inférieure à 1 mm en étant de préférence comprise entre environ 50 µm et 500 µm.

6. Utilisation suivant la revendication 1, dans laquelle les électrodes (2, 3) sont en métal, notamment en platine.

7. Utilisation suivant la revendication 1, dans laquelle les ouvertures (5) d'au moins l'une des électrodes (3) sont réalisées par une forme en grille ou en réseau.

8. Utilisation suivant la revendication 1, dans laquelle le ferroélectrique (4) est en titanate de plomb et de zirconium (PZT) ou en titanate de plomb de lanthane et de zirconium (PLZT).

9. Lampe (6) à décharge, comprenant une enceinte de décharge en un matériau non conducteur de l'électricité, au moins partiellement transparente, emplie d'une atmosphère gazeuse, fermée (7) ou ouverte en étant parcourue par un gaz ou par un mélange de gaz et une cathode froide ou plusieurs cathodes froides disposées à l'intérieur de l'enceinte de décharge et ayant des électrodes (1) de polarité négative ainsi qu'une anode ou plusieurs anodes ayant des électrodes (8) de polarité positive, **caractérisée en ce que** la cathode (les cathodes) (1) a (ont) les caractéristiques de l'une des revendications 1 à 8.

10. Lampe à décharge suivant la revendication 9, dans laquelle la cathode (les cathodes) (1) est (sont) disposée(s) sous forme de bandes sur la paroi intérieure de l'enceinte (7) de décharge et est (sont) disposée(s) de façon que les ouvertures soient dirigées dans la (les) cathode(s) (1) en direction de l'intérieur de l'enceinte (7) de décharge.

11. Lampe à décharge suivant la revendication 9, dans laquelle l'anode ou les anodes (8) sont séparées de l'intérieur de l'enceinte (7) de décharge et le cas échéant entre elles par de la matière (11) diélectrique.

12. Lampe à décharge suivant la revendication 11, dans laquelle l'anode (les anodes) (8) est (sont) disposée(s) en forme de bandes sur la paroi intérieure de l'enceinte (7) de décharge et dans laquelle chaque bande (8) d'anode est entièrement revêtue d'une couche (11) électrique.

13. Procédé pour faire fonctionner une lampe (6) à décharge ayant les caractéristiques de la revendication 9, **caractérisé par** les stades de procédé suivants
- mise à disposition d'un premier signal (U1) de tension variable dans le temps changeant rapidement de polarité,
- mise à disposition d'un deuxième signal (U2) de tension variable dans le temps,
- synchronisation du premier et du deuxième signal de façon qu'à un changement rapide de polarité du premier signal (U1) fasse suite une augmentation de la valeur absolue de l'amplitude du deuxième signal (U2),
- application du premier signal (U1) de tension aux électrodes (2, 3) de (des) cathode(s) froide(s) (1), la (les) cathode(s) froide(s) (1) libérant à chaque changement de polarité des électrons qui passent dans les ouvertures (5),
- application du deuxième signal (U2) de tension à l'anode (aux anodes) (8) et à la cathode (aux cathodes) froide(s) (1) de la lampe (6) à décharge, de façon qu'à chaque augmentation de la valeur absolue de l'amplitude du deuxième signal (U2) de tension les électrons libérés soient accélérés en direction de l'anode (des anodes) (8) et contribuent ainsi à l'amorçage ou à l'entretien de la décharge.

14. Procédé suivant la revendication 13, dans lequel le laps de temps pour le changement de polarité du premier signal (U1) de tension est inférieure à 500 ns environ.

15. Procédé suivant la revendication 13, dans lequel le deuxième signal (U2) de tension variable dans le temps est constitué d'impulsions de tension séparées par des intervalles entre les impulsions.

16. Procédé suivant la revendication 15, dans lequel la largeur des impulsions est comprise entre 0,1 µs et 10 µs environ et de préférence entre 0,5 µs et 5 µs environ.

17. Procédé suivant la revendication 15 ou 16, dans lequel la fréquence de répétition des impulsions est comprise entre 1 kHz et 1 mHz environ et de préférence entre 10 kHz et 100 kHz environ.

18. Procédé suivant la revendication 13, dans lequel le deuxième signal (U2) de tension variable dans le temps est constitué d'une tension alternative.
